# EUROPEAN PATENT APPLICATION

(11) **EP 4 495 571 A1**
(43) Date of publication of application: **22.01.2025**
(21) Application number: 22931268.1
(22) Date of filing: 18.03.2022
(51) Int. Cl.: G01M 13/045, G01H 17/00, H02K 11/20, H02P 29/60

(54) **SENSING DEVICE FOR A PIECE OF EQUIPMENT**

(71) Applicant: WEG Equipamentos Elétricos S.A., 89256-900 Jaraguá do Sul, SC (BR)
(72) Inventor: BITTENCOURT DE OLIVEIRA, Lucas, Jaragua do Sul (BR); DOS SANTOS TAVARES, Lucas Henrique, Jaragua do Sul (BR); SCIEPIET, Marco Aurelio, Jaragua do Sul (BR); SELL GONÇALVES, Vinicius, Jaragua do Sul (BR)
(74) Representative: Plasseraud IP
(86) International application number: PCT/BR2022/050098
(87) International publication number: WO 2023/173184

(57) **Abstract**

The present invention relates to a sensor device for attachment to an equipment shell, the device comprising a casing (1) configured for attachment to an equipment shell by means of a fastening system comprising a bushing (4) with a cylindrical part internal to the casing and a flange part (4a) configured to contact the equipment shell when the device is attached to it, the casing (1) housing a plurality of sensors for measuring data related to the operating condition of the equipment, at least one processor configured to receive the data measured by the sensors; and at least one means of wireless communication for communication with a server remote to the device, in which the casing (1) comprises a casing body (2), which receives, at one end, a printed circuit board (11) which receives an acoustic sensor (12) for structural noise measurement, the printed circuit board (11) being in contact with the flange part (4a) of the bushing (4).

## Description

### FIELD OF THE INVENTION

The present invention refers to a sensor device for an equipment item and, more specifically, to a sensor device to monitor the operating status of equipment whose operation generates vibration and noise.

### BACKGROUND OF THE INVENTION

Equipment operation monitoring sensors - such as electric motors and generators, transformers, pumps, gearmotors, etc. - are increasingly common and popular. They enable the operational condition of the machines to be observed and, accordingly, assist in maintaining the equipment in an optimized manner, reducing the number of faults and, consequently, unwanted stoppages.

This type of device is usually attached to the surface of the equipment shell, so that it can sense operating conditions, such as temperature, vibration, noise generation, etc. Thus, it is common for this type of device to have vibration, temperature, magnetic field, and acoustic sensors housed in a casing attached to the equipment.

Document WO 2016168055 shows a sensor module that has a mounting bracket that is also attached to the shell of a machine - for example, a pump - using an epoxy adhesive. The module comprises a casing with encapsulated electronics that includes sensors configured to respond to the condition of the machine, including temperature sensors and accelerometers.

Document BR 202017015546-9 shows a condition monitoring device for monitoring an electrical machine comprising a plurality of sensors, including at least one magnetic field measurement unit, a vibration sensor, a temperature sensor, and an acoustic sensor.

An important issue associated with monitoring devices fixed to the machine shell is the ability to effectively sense operating conditions, enabling the collection of data with sufficient quality to feed into a local or remote analysis system. Once the sensors are attached to the machine shell, they are subject to interference from external environmental conditions, which can significantly affect the data collected.

Thus, the state of the art is still in need of a sensor device for attachment to the equipment shell that is capable of collecting high-quality data for the analysis of the operating conditions of the equipment.

### OBJECTIVES OF THE INVENTION

It is thus one of the objectives of the present invention to provide a sensor device for attachment to an equipment shell that is capable of collecting high-quality data for the analysis of the operating conditions of an equipment.

It is another objective of the present invention to provide a sensor device for attachment to an equipment shell that is capable of collecting data from the equipment with little or no interference from the external environment.

### BRIEF DESCRIPTION OF THE INVENTION

The present invention achieves these and other objectives by means of a sensor device for attachment to a shell of an equipment, the device comprising a casing configured for attachment to the shell of the equipment, and the casing is fixed to the shell by means of a fastening system comprising a bushing with a cylindrical part internal to the casing and a flange part configured to contact the shall of the equipment when the device is fixed to it. The enclosure houses a plurality of sensors for measuring data related to the operating condition of the equipment, at least one processor configured to receive the data measured by the sensors; and at least one wireless communication means for communication with a remote server to the device. The casing comprises a casing body, which receives, at one end, a printed circuit board that receives an acoustic sensor for structural noise measurement, the printed circuit board being in contact with the flange part of the bushing.

In an embodiment of the invention, at least one region of an internal space defined by the casing body receives a resin encapsulation material to form an encapsulated internal region; and wherein at least part of the printed circuit board and at least part of the cylindrical part of the bushing is in the encapsulated region.

The casing body can be closed by a lid.

The plurality of sensors also comprises at least one vibration sensor, at least one surface temperature sensor, at least one ambient temperature sensor, and at least one magnetic flow sensor.

In an embodiment of the invention, the device further comprises a second internal circuit board, spaced apart from said internal circuit board, wherein at least one ambient temperature sensor is arranged on the second internal circuit board and wherein the at least one surface temperature sensor is arranged on said internal circuit board. At least one remote communication element can be arranged on the second internal circuit board.

The device can further comprise at least one battery for power supply, the battery being arranged in a battery holder arranged in the casing body. In an embodiment of the invention, the device comprises two batteries and two battery holders arranged in the casing body.

### BRIEF DESCRIPTION OF THE DRAWINGS

This invention will be described in more detail below, with references to the accompanying drawings, in which:
**Figure 1** - is a top-down perspective view of a sensor device according to an embodiment of the present invention;
**Figure 2** - is a bottom-up perspective view of a sensor device according to an embodiment of the present invention;
**Figure 3** - is a top-down perspective view of a sensor device according to an embodiment of the present invention, the device being shown without the top lid;
**Figure 4** - is a perspective view of the top lid of a sensor device according to an embodiment of the present invention;
**Figure 5** - is a top-down perspective view of the casing body of the sensor device according to an embodiment of the present invention;
**Figure 6** - is a top view of the casing body of a sensor device according to an embodiment of the present invention;
**Figure 7** - is a bottom view of the casing body of a sensor device according to an embodiment of the present invention;
**Figure 8** - is a rear perspective view of a sensor device according to an embodiment of the present invention, the device being shown without the body part of the enclosure;
**Figure 9** - is a frontal perspective view of a sensor device according to an embodiment of the present invention, the device being shown without the body part of the enclosure;
**Figure 10** - is a top-down perspective view of a cross-section of the enclosure of a sensor device according to an embodiment of the present invention.

### DETAILED DESCRIPTION OF THE INVENTION

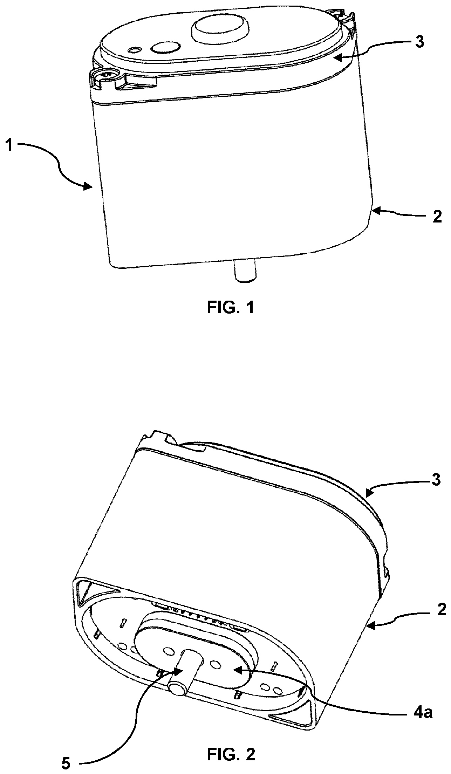

Figures 1 to 10 show an embodiment of a sensor device for attachment to the shell of an equipment according to the present invention. In the illustrated embodiment, the equipment is an electrical machine, but it should be understood that the sensor device could be used to monitor other equipment whose operation generates vibration and noise.

The sensor device is attached to the equipment shell and is capable of collecting data on the equipment's operating condition.

The sensor device comprises a casing preferably made of polymer material. In the embodiment of the invention shown in the drawings, the polymer material is a polycarbonate, but different materials could be used, as long as the criteria of quality and reliability of operation are met.

Enclosure 1 is configured to house a plurality of sensors for the equipment's operating conditions, including, but not limited to, a vibration sensor, surface temperature sensor, ambient temperature sensor, and magnetic flow sensor. The operation of these sensors in the context of a device that senses the operating conditions of equipment is known to persons skilled in the art and, therefore, will not be detailed here.

The casing 1 comprises a casing body 2 and a lid 3, which closes the casing body. The casing 1 is fixed to the shell by means of a fastening system comprising a bushing 4 for receiving a fastening element 5. In the preferred embodiment of the invention, bushing 4 comprises a cylindrical part and a flange part. The cylindrical part receives the fastening element 5 and the flange part 4a assists in the attachment to the machine.

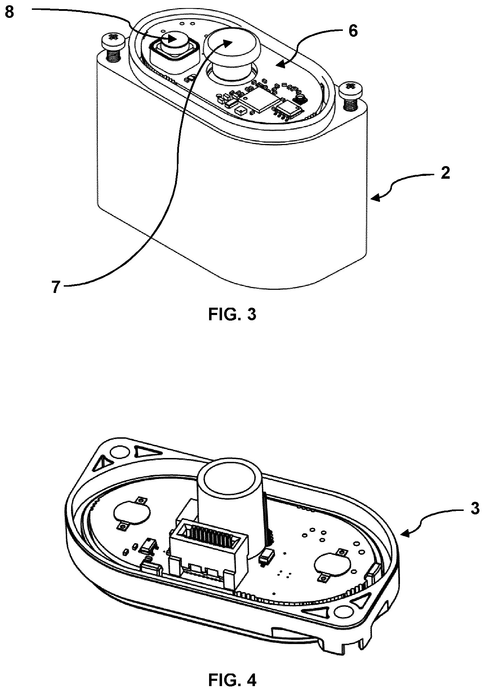

As shown in Figure 3, the upper part of the casing body 2 comprises an upper internal circuit board 6 on which communication elements with a remote device can be arranged.

The upper part of the casing body 2 can also include a plug 7 for the anchoring bushing 4 of the fastening system and an interface button 8. The button 8 can, for example, be used to trigger a configuration mode for the sensor, and this configuration can be performed on a portable device wirelessly connected to the sensor. The upper part of the casing body 2 can comprise additional elements, such as a LED indicator.

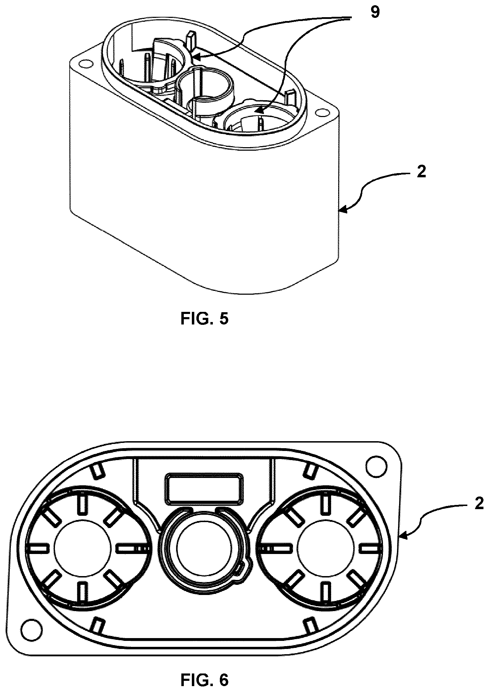

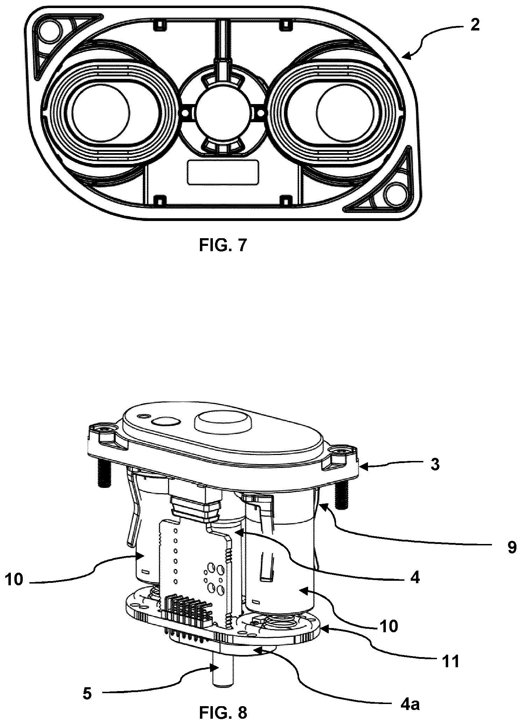

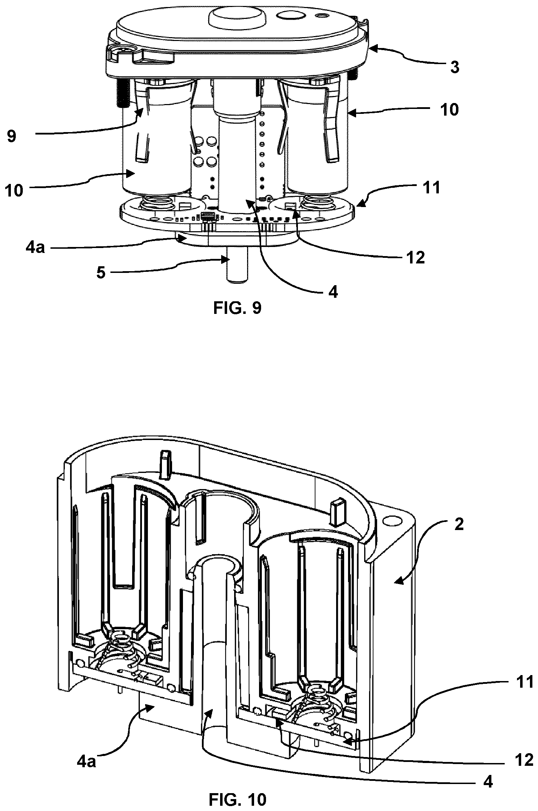

The casing body 2 also houses at least one battery holder 9. As shown in Figure 5, in the illustrated embodiment, the casing body houses two battery holders 9. Said battery holders 9 can be best visualized in figures 8 and 9, which show the sensor device with the casing body concealed in the drawing.

The 9 battery holders support the 10 batteries that power the device. Although the illustrated embodiment of the device makes use of two batteries, it should be understood that alternative embodiments could use one or more batteries.

Figures 6 and 7 show, respectively, upper and lower views of the casing body 2. As can be seen in these figures, the casing body 2 is preferably formed as a single piece, which has openings for the passages of the components and for the attachment of the lid 3.

Figures 8 through 10 show the device elements that are housed in the casing body. Thus, figures 8 and 9 show the sensor device with the casing body concealed in the drawing, and figure 10 shows the sensor device with the illustrated sectioned casing body and lid, top elements, and concealed batteries.

As can be seen in figures 8 to 10, casing body 2 includes a second printed circuit board 11. The second printed circuit board 11 connects an acoustic sensor 12 to capture the ultrasonic sound transmitted by a structure (*structure-borne sound -* SBS), which can also be understood by structural noise measurement.

The SBS transmission has faster propagation, emits more than one type of wave, and has lower sound energy dissipation. In addition, the SBS transmission is minimally affected by external noise, as external or ambient sound generally lacks the energy to excite and propagate through the structure.

Thus, by using an acoustic sensor 12 for structural noise measurement, the device of the present invention is capable of detecting failures in early and moderate stages in the bearings of the equipment, whose produced ultrasonic transients are not able to be detected by airborne audible sound ( - ABS) sensors.

The use of the SBS sensor allows, for example, the device of the present invention to detect incipient defects such as lubrication failure, which is not possible with the use of ABS sensors.

It should be noted that, as best illustrated in figures 9 and 10, the board 11, which supports the acoustic sensor for structural noise measurements 12, is in contact with the bushing 4 and its flange part 4a. In turn, the flange part of flange 4a is in contact with the equipment shell when the device of the present invention is attached to the equipment shell. This direct contact enables an extremely efficient reading of the structural noise sensor 12, which is made even more efficient by the fact that the bushing 4 is preferably constructed of metal material.

In fact, since the speed of sound generally propagates much faster in metals, the construction of the bushing 4 made of metal material constitutes an efficient solution for propagating structural noise.

In the preferred embodiment of the invention shown in the figures, the region of the casing body 2 that receives the board 11 can be encapsulated in resin, so that the electronic components connected there are also encapsulated.

The encapsulation, which also covers part of the bushing 4 and the structural noise sensor 12, gives rigidity to the assembly and contributes to a more accurate measurement of the noise of the equipment in which the sensor is fixed, since the resin encapsulation provides isolation from external noise. In this way, it is possible to obtain ultra-frequency sound components with minimal contamination from ambient noise through the structural noise sensor 12, in which post-processing elements - such as the application of kurtosis (k) and a digital filter to discard information below 10 kHz - are used to highlight the representative phenomena of early equipment bearing failures.

In this sense, it should be noted that in the preferred embodiment of the present invention, the data collected by the sensors are sent, via wireless communication module, to a server (gateway, cell phone, or other applicable means), where said data is processed in the cloud to identify faults. Identifying faults can be carried out in an automated manner or via visual inspection of the data.

This remote processing characteristic of the present invention optimizes the processing resources and enables greater flexibility in the construction of processing algorithms that will analyze the data collected by the sensor. This characteristic also makes it possible to build a local device - that is, a fixation device on the machine - of lower complexity and, consequently, of lower cost.

The construction of the sensor device according to the present invention is preferably carried out with two printed circuit boards 6, 11. This is because the sensing elements can be arranged on each of the 6, 11 boards according to the best operating efficiency. In an embodiment of the present invention, the communication and ambient temperature sensor elements are preferably, but not limited to, arranged on the upper printed circuit board 6, and the measuring elements (sensors) of the equipment operation data are preferably, but not limited to, arranged on the lower printed circuit board 11.

Thus, in an embodiment of the invention, while the ambient temperature sensor is arranged on the upper printed circuit board 6, a surface temperature sensor, intended to measure the temperature on the bushing 4, is arranged on the lower printed circuit board 11.

The distribution of the printed circuit boards in the preferred configuration enables more accurate surface temperature measurement, due to the distance between the bottom board sensor, which measures the temperature in the bushing, and the top board sensor, which measures the ambient temperature. In addition, the preferred configuration enables the two poles of the batteries to be connected and also allows for partial encapsulation of the circuit.

Having described examples of embodiments of the present invention, it should be understood that the scope of the present invention encompasses other possible variations of the inventive concept described, being limited only by the content of the claims, including possible equivalents.

## Claims

1. A sensor device for attachment to an equipment shell, the device comprising a casing (1) configured for attachment to the equipment shell, the shell (1) being attached to the equipment shell by means of a fastening system comprising a bushing (4) with a cylindrical part internal to the casing and a flange part (4a) configured to contact the equipment shell when the device is attached to it, the casing (1) housing a plurality of sensors for measuring data related to the operating condition of the equipment, at least one processor configured to receive the data measured by the sensors; and at least one means of wireless communication for communication with a server remote to the device, **characterized by** the fact that the casing (1) comprises a casing body (2), which receives, at one end, a printed circuit board (11) which receives an acoustic sensor (12) for structural noise measurement, the printed circuit board (11) being in contact with the flange part (4a) of the bushing (4).

2. The device according to claim 1, **characterized in that** the bushing (4) is made of metal material.

3. The device according to claim 1 or 2, **characterized in that** that at least one region of an internal space defined by the casing body (2) receives a resin encapsulation material to form an encapsulated internal region; and wherein at least part of the printed circuit board (11) and at least part of the cylindrical part of the bushing (4) is in the encapsulated region.

4. The device according to any of claims 1 to 3, **characterized in that** the casing body (2) is closed by a lid (3).

5. The device according to any of claims 1 to 4, **characterized in that** the plurality of sensors further comprises at least one vibration sensor, at least one surface temperature sensor, at least one ambient temperature sensor, and at least one magnetic flow sensor.

6. The device according to claim 5, **characterized by** further comprising a second internal circuit board (6), spaced apart from said internal circuit board (11), in which at least one ambient temperature sensor is arranged on the second internal circuit board (6) and in which the at least one surface temperature sensor is arranged on said internal circuit board (11).

7. The device according to claim 6, **characterized by** further comprising at least one remote communication element arranged on the second internal circuit board (6).

8. The device according to any of claims 1 to 7, **characterized by** comprising at least one battery (10) for power supply, the battery being arranged in a battery holder (9) disposed in the casing body (2).

9. The device according to claim 8, **characterized by** comprising two batteries (10) and two battery holders (9) arranged in the casing body.
